# EUROPEAN PATENT APPLICATION

(11) **EP 0 713 995 A1**
(43) Date of publication of application: **29.05.1996**
(21) Application number: 95500160.7
(22) Date of filing: 22.11.1995
(51) Int. Cl.: F16L 55/033, F16K 47/02

(54) **Resilient bushing for damping the sound level in wall-mounted mixer taps**

(30) Priority: 23.11.1994 ES 9403007 U; 28.02.1995 ES 9500535 U
(71) Applicant: COMPANIA ROCA-RADIADORES, S.A., E-08850 Gava (Barcelona) (ES)
(72) Inventor: Singla Palacin, Jaime, E-08850 Gava (Barcelona) (ES)
(74) Representative: Durán Olivella, Alfonso

(57) **Abstract**

The bushing consists of a resilient bushing (3, 20) which, together with the interior of the off center connecting part (1, 26) to which it is fitted, forms an expansion chamber in the form of a circular ring, for absorption of vibrations from the flow of fluid, characterised substantially in that it has a rigid bushing (2, 15) fitted on the inner wall of the resilient bushing (3, 20), which by means of some central apertures (8, 16, 17, 18, 19) regulates the area of pressure in the expansion chamber. The rigid inner bushing (2, 15) is inserted between an inner recess (4) in the intake area and a likewise inner projection (5) in the output area of the resilient bushing, thus providing the assembly with axial rigidity.

## Description

The present invention relates to a resilient bushing for damping the sound level in wall-mounted mixer taps, which has substantially innovative features compared with those currently known.

In modern type mixer taps, and in particular taps which are fitted to the wall, one of the most important features consists of the low sound level during use. However, depending on the water pressure and its variations, and on the features of the flow, which can be more or less turbulent when the water enters the tap and the off center connecting part for mounting the tap on the wall, it is very common for a more or less high sound level to be produced. The practical consequences of this sound level can be exacerbated by the fact that in many cases, the partition wall to which the taps are attached is thin, such that it gives rise to a potentially high level of vibration, which tends to increase further the sound level.

In order to damp these vibrations and reduce the sound level in the taps in question, specific devices are known which comprise resilient-type bushings inserted in the path of the water in the off center connecting part, thus reducing the noise level to some extent.

The object of the present invention is to provide new features for resilient bushings of this type, which permit more substantial noise-damping, and which in addition have technical features which permit much faster and efficient fitting of the bushing and tap on the outer end of the off center connecting part.

The bushing which is the subject of the present invention essentially consists of a resilient material which allows the water to pass through its interior, and together with the off center connecting part forms an annular expansion chamber which is sealed on the intake side by means of a diametral projection of the resilient bushing which fits the inner diameter of the off center connecting part, and on the output side by means of a collar of substantial thickness, with a larger diameter, which also seals said off center connecting part against the tap, thus replacing the conventional seals where the two parts join.

In order to control the level of flexibility of the resilient bushing, and therefore the level of absorption of vibration of the flow of fluid in the interior, there is provided a rigid inner bushing consisting of a single piece, with some central apertures, and a collar which has a larger diameter and is inserted in an inner groove of the resilient bushing, in the area of sealing on the bushing intake side, thus consolidating the position between the two bushings. This rigid bushing provides the resilient bushing with adjustable diametral flexibility, according to the width of the apertures, and axial rigidity which facilitates fitting on the off center connecting part.

According to an alternative embodiment of the present invention, ribs are provided which extend longitudinally from the resilient bushing, along generatrices of the said bushing, and from one of the end collars of the bushing to the other, establishing contact with the inner walls of the off center connecting part. These ribs coincide with the blind parts of the rigid inner bushing, such that they are preferably disposed diametrically opposite to one another, although this is not essential since in theory the distribution of apertures and intermediate solid areas can be asymmetrical.

Preferably two diametrically opposed ribs are disposed such as to coincide with the diametrically opposed areas occupied by solid walls of the rigid inner component of the bushing, and there can be a larger number, such as four, of these ribs, in which case the arrangement is preferably in two diametrically opposed pairs. However, there can also be arrangements based on three ribs, or a larger number, if this is considered appropriate.

The exact shape of the aforementioned ribs can vary, particularly concerning their transverse cross-section, although a transverse cross-section is preferably used which has a shape such that its cross-section decreases from the base or foot of the bushing, to its top or area which is adjacent the inner walls of the off center connecting part.

In order to assist understanding, by way of example there is attached an explanatory drawing of a resilient sound-damping bushing according to the present invention.

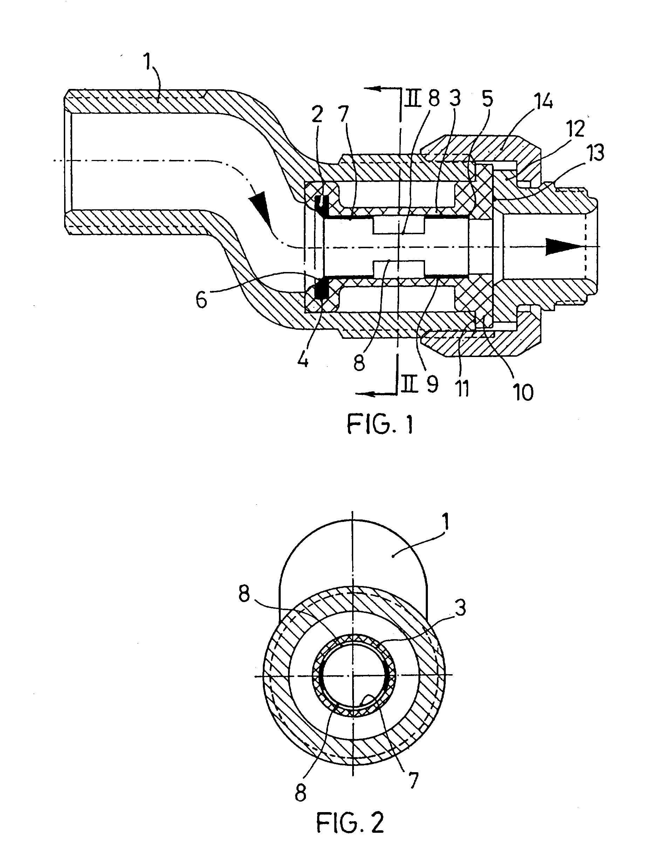

Figure 1 is a complete longitudinal cross-section of a resilient sound-damping bushing, with its rigid inner bushing fitted according to the present invention;
Figure 2 is a transverse cross-sectional view on the plane indicated in Figure 1;
Figures 3 and 4 are views in perspective and transverse cross-section of a bushing of an alternative embodiment which is provided with four transverse ribs;
Figures 5 and 6 are views equivalent to Figures 3 and 4, corresponding to a bushing which has two diametrically opposed ribs;
Figures 7 and 8 are longitudinal and transverse cross-sections of a bushing according to the alternative embodiment of the present invention, connected to an off center connecting part for fitting of a tap, and corresponding to the case with two diametrically opposed ribs; and
Figures 9 and 10 are figures equivalent to Figures 7 and 8, in the case of a bushing with four diametrically opposed ribs.

As can be seen from the drawings, the bushing which is the subject of the present invention can be fitted to each of the off center connecting parts 1 used for attachment of wall-mounted mixer taps, and is characterised in that the rigid bushing 2 is fitted inside the resilient bushing 3, and is secured to the said bushing 3 between the recess 4 and the projection 5.

The rigid bushing 2 has at its intake a bevel 6 in order to facilitate entry of the flow into the rigid area 7, and 2 to 4 apertures 8 with a width approximately 1.5 times that of the rigid areas 7 and 9.

The bushing which is the subject of the present invention additionally has a special feature which considerably facilitates fitting, consisting of a collar 10 which is of considerable thickness at its output end, i.e. that of entry into the tap, which abuts the end edge of the off center connecting part 1 on its surface 11, receiving the body of the tap 12 on its surface 13, sealing being provided by the clamping pressure imparted by the surrounding attachment nut 14.

This arrangement of components permits fast fitting, since the bushing which is the subject of the present invention is inserted in the off center connecting part and abuts the collar, without any need to seek its position or to solve problems of axial and radial retention, at the same time avoiding the need for a separate sealing washer to be fitted in advance on the clamp.

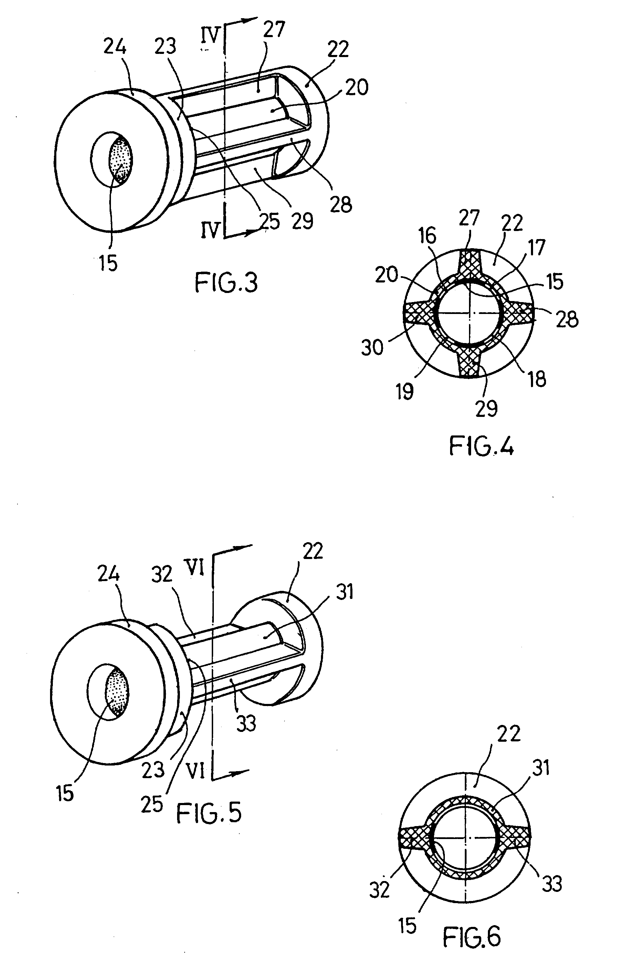

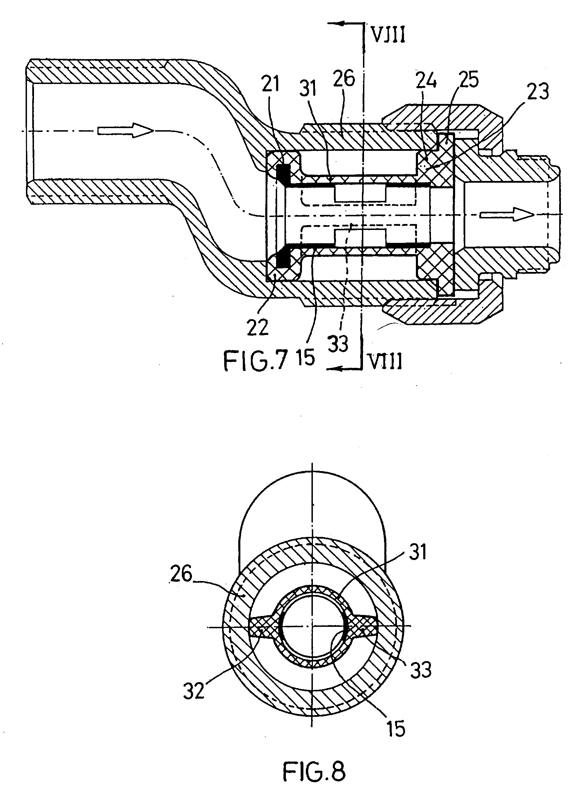

In the alternative embodiment in Figures 3 to 10, the bushing which is the subject of the present invention comprises a bushing in the form of a rigid cylindrical inner body 15, which has a series of longitudinal apertures indicated 16, 17, 18 and 19 in Figure 4, which are separated by the same number of solid areas of this bushing 15, which is incorporated as a whole, as can be seen in Figures 7 to 9 inside the resilient bushing 20, with a collar 21 at one of the ends which is inserted in a recess provided for the collar in the thickened end 22 of the resilient bushing 20. At its other end the resilient bushing 20 has another thickened part 23 with two stepped areas 24 and 25, the first of which coincides with the inner wall of the off center connecting part 26 in the same way as the thickened part 22 at the other end, whereas the collar 25 abuts the end edge of the off center connecting part 26.

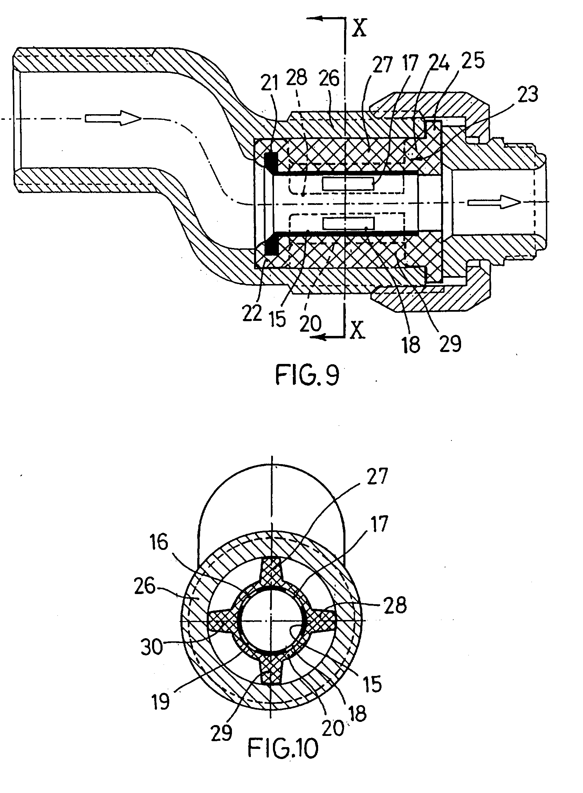

This bushing has longitudinal ribs disposed as indicated in numbers 27, 28, 29 and 30 in Figure 4, which start from the cylindrical part of the bushing and extend until contact is made with the inner surface of the off center connecting part 26, as shown in Figures 8 and 10.

By means of this arrangement, the elasticity of the bushing for damping vibrations caused by the water is limited and controlled in the areas of the apertures 16 to 19 of the rigid bushing, the effect of which is a lower noise level in the tap fitted.

As already stated, the number and arrangement of the ribs of the resilient bushing are variable, Figures 5, 6, 7 and 8 showing an embodiment based on two ribs, in which the resilient bushing 31 has two diametrically opposed ribs 32 and 33, with features similar to those previously indicated in the embodiment in Figures 3, 4, 9 and 10.

It will be appreciated that the essential feature of this alternative embodiment of the invention consists in the arrangement of ribs which project from the surface of the resilient bushing, and extend as far as the inner surface of the part for connection of the tap. These ribs are preferably straight and extend from one thickened end part of the bushing to the other, and can be slightly oblique relative to the bushing, i.e. their arrangement can be slightly helical and optionally they need not reach the thickened end parts of the resilient bushing, provided that the rigidity of the ribs is sufficient, and these ribs can also be replaced by simple semi-rigid support projections between the bushing and the inner wall of the off center connecting part.

## Claims

1. Resilient bushing for damping the sound level in wall-mounted mixer taps, of the type consisting of a resilient bushing which forms together with the interior of the off center connecting part in which it is fitted an expansion chamber in the form of a circular ring for absorption of vibrations from the flow of fluid, characterised substantially in that it has a rigid bushing (2, 15) which fits the inner wall of the resilient bushing (3, 20), which by means of some central apertures (8, 16, 17, 18, 19) regulates the area of pressure in the expansion chamber.

2. Bushing according to Claim 1, characterised in that the rigid inner bushing (2, 15) is inserted between an inner recess (4) in the intake area and a likewise inner projection (5) in the output area of the resilient bushing (3, 20), thus providing the assembly with axial rigidity.

3. Bushing according to Claims 1 and 2, characterised in that on its end for connection to the intake of the tap, the resilient bushing (3, 20) has a large collar (10) of considerable thickness which reinforces the bushing and acts as a seal between the off center connecting part (1, 26) and the body of the tap.

4. Bushing according to Claim 1, characterised in that the resilient bushing (3, 20) has on its outer surface and in the areas which coincide with the solid parts of the rigid inner bushing (2, 15) longitudinal ribs (27, 28, 29, 30) which extend from the outer surface of the resilient bushing (3, 20) to the inner surface of the off center connecting part (1, 26).

5. Bushing according to Claim 4, characterised in that the position of the ribs (27, 28, 29, 30) coincides with the solid or blind areas of the rigid bushing (2, 15) which is fitted inside the resilient bushing (3, 20).
